# EUROPEAN PATENT SPECIFICATION

(11) **EP 0 650 249 B1**
(45) Date of publication and mention of the grant of the patent: **13.10.1999**
(21) Application number: 94830381.3
(22) Date of filing: 25.07.1994
(51) Int. Cl.: H02M 3/156, G05F 1/575

(54) **Buck converter with operating mode automatically determined by the load level**
Abwärtswandler mit einer durch die Grösse der Last automatisch bestimmten Betriebsart
Convertisseur abaisseur à un mode d'opération déterminé automatiquement par la grandeur de charge

(30) Priority: 22.10.1993 IT VA930022
(43) Date of publication of application: 26.04.1995
(73) Proprietor: STMicroelectronics S.r.l., 20041 Agrate Brianza (Milano) (IT)
(72) Inventor: Borghi, Maria Rosa, I-20010 Marcallo con Casone (IT); Sandri, Paolo, I-20135 Milano (IT)
(74) Representative: Pellegri, Alberto

(56) References cited:
- EP-A- 0 421 245
- EP-A- 0 446 490
- EP-A- 0 447 637
- EP-A- 0 473 925
- EP-A- 0 559 336
- WO-A-95/09475
- US-A- 5 247 239

## Description

In static converters operating in a switching mode, conversion efficiency may be improved by reducing the conduction losses of the switch, given by the product between the internal resistance of the switching device and the current, plus the switching losses that are a function of the frequency and speed of the transitions. Normally a converter is designed for a certain level of switched current under normal steady state conditions of operation, by establishing case by case, beside the size of the power devices also the switching frequency and duty-cycle when operating in a steady state condition.

Generally, for relatively high switched currents, conduction losses will be more relevant, while for relatively low switched currents (that is during periods of operation when the current level and duty-cycle of the converter are reduced) switching losses become more and more relevant.

Several techniques for reducing the switching frequency of the power switch when the load level decreases in order to increase the overall conversion efficiency of the system, are known. The known solutions may be classified in two distinct categories:
a) the control circuit of the converter is completely switched-off with the exception of the circuits that handle the turn-off phase, and is reactivated when the output voltage drops below a preset minimum threshold, to be switched off again when the output voltage becomes higher than a preset maximum threshold;
b) the control system of the switch is maintained always active, but the switch is commanded to switch for brief bursts of high frequency switchings (burst mode), the duration of which is established by the time necessary for the output voltage, once has dropped below a minimum threshold, to rise back again above a maximum threshold.

Known approaches of the first category have the drawback that in case of integrated buck converters, where the power switch (transistor) may also be integrated, it is necessary to maintain active the circuit that directly control the turn-on and the turn-off of the power transistor. In conclusion, the limited saving that can be achieved may be negatively counterbalanced by an increased complexity of the circuit, in view of the fact that special monitoring circuits of internal voltages must be introduced.

The approaches of the second category, though better adapting themselves to situations that may exclude the possibility of using a solution of the first category, are not very effective in terms of power saving, because also during periods of operation at a relatively low load level of the converter, switching losses persist during burst periods.

The PCT Application WO-A-9509475 published on 6/4/95, discloses a dual mode power saving DC-DC converter in which the control mode is automatically switched from a PWM mode to an hysteretic mode in function of the sensed level of the output current. Two current sensors are coupled to control logics for disabling and unabling one or the other of the two control loops.

### SUMMARY OF THE INVENTION

Therefore there is a need or utility of a converter that would allow an optimization of its efficiency during periods of operation when the converter outputs a relatively low current, that is during periods of operation at a relatively low load level.

This objective is fully met by the converter object of the present invention which is characterized by the ability of driving the power switch with a signal produced by a conventional PWM control network during a phase of operation at a relatively high load level and viceversa with a signal produced by a hysteresis comparator, during a phase of operation at a relatively low load level.

The automatic selection of one or the other mode of operation of the converter is effected by a logic circuitry capable of generating an enabling/disabling signal of the alternatively activatable control networks.

Monitoring of the load level of the converter is effected without employing dissipative sensing devices, but by comparing the duty-cycle of either one or the other of the two alternative driving signals with a reference value. In the case of the driving signal produced by the PWM control network, which is active during normal conditions of operation with a relatively high load of the converter, its current duty-cycle is compared with a signal representing a preset reference (or threshold) duty-cycle, which may be indicatively comprised between 30% and 50% of the design, steady state, duty-cycle under normal operating condition of the converter.

In practice, the converter automatically passes from a "continuous" mode of operation, controlled by a conventional PWM control network, to a "discontinuous" mode of operation during which the turning-on and the turning-off of the power switch are controlled directly in function of the output voltage in a hysteretic mode, without switchings syncronous with the clock signal of the circuit, viceversa, in function of the load level. This permits to eliminate almost entirely the switching losses during periods of operation of the converter at a low load level.

The different aspects and advantages of the converter of the invention will become evident through the following description of several important embodiments, incorporated herein by express reference, and by referring to the attached drawings, wherein:
**Figure 1** shows a functional electrical power scheme of a common buck converter normally used in step-down systems, from a supply voltage Vs to a lower output voltage Vo;
**Figure 2** shows the respective wave forms of the currents for two different conditions of operation of the power converter circuit;
**Figure 3** shows an illustrative diagram of a burst-mode operation of a converter, during periods of operation at low load, according to a known technique;
**Figure 4** shows a diagram of a mode of operation with a hysteretic direct control of the switch, during a period of operation at a low load level of the converter, as implemented by the circuit of the present invention;
**Figure 5** is a block diagram of a buck converter provided with a circuit for selecting the mode of operation and control according to the present invention;
**Figure 6** is a partial block diagram of an embodiment of part of the circuit of the invention;
**Figure 7** is a partial block diagram of an embodiment of another part of the circuit of the invention;
**Figure 8** is a circuit diagram of a generator of a signal representative of a certain functionary duty-cycle as compared with a design duty-cycle, usable in the circuit of the invention;

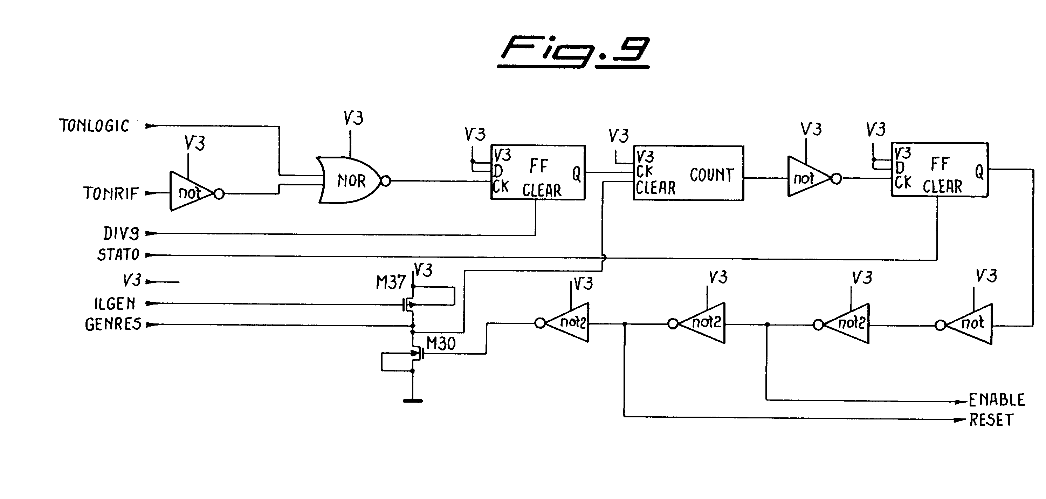

**Figure 9** is a circuit diagram of a portion of the circuit of Fig. 6;
**Figure 10** is a circuit diagram of the portion of the circuit of the invention of Fig. 7;
**Figure 11** is a circuit diagram of a hysteresis comparator usable in the circuit of the invention of Fig. 5.

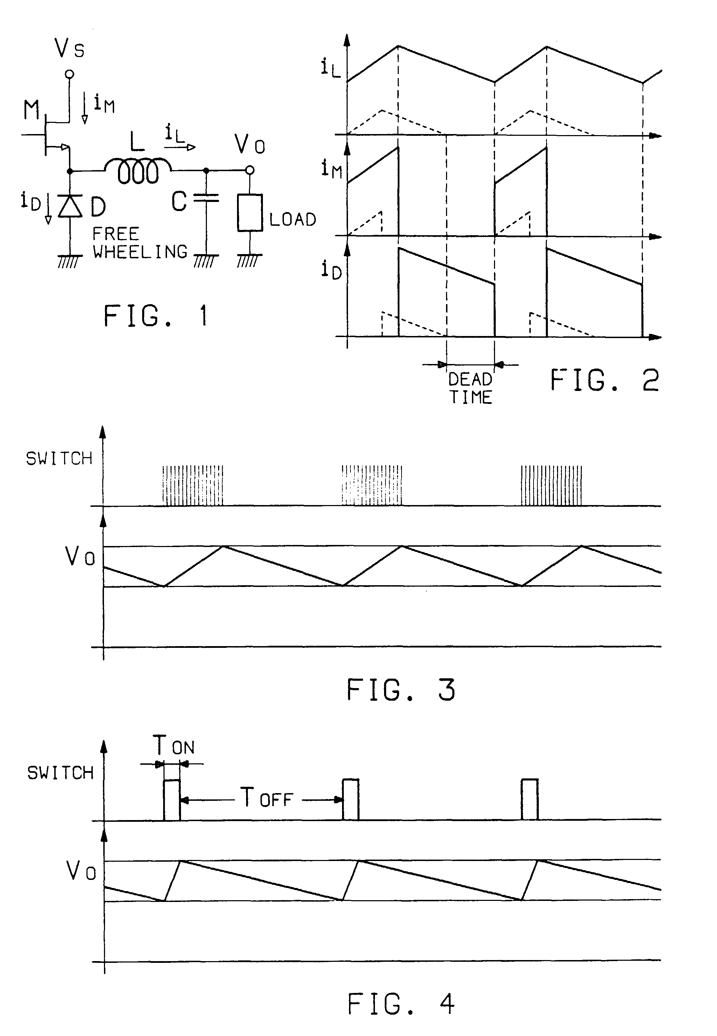

With reference to Fig. 1, a static DC-DC converter that is widely used is the so-called buck converter, commonly used in systems where the voltage must be reduced from a (unstabilized) supply voltage Vs to a stabilized lower voltage Vo.

Of course the invention is useful and may be employed with advantages also in other types of DC-DC static converters, as will be evident to a skilled person.

Reverting to the particular embodiment taken into consideration, the power structure of a buck converter is in a way extremely simple. It consists essentially of a power switch, for example a transistor M, capable of intermittently connecting a first terminal of an inductor L to the supply node Vs. The second terminal of the inductor L is connected to an armature of an output capacitor C, which represents the output node Vₒ of the circuit. The circuit is completed by a free-wheeling diode D.

The wave form of the current i_{L}, i_{M} and i_{D}, which flow through the inductor L, the switch M and the diode D respectively, are depicted in the diagrams of Fig. 2.

The wave form of the currents in a continuous mode of operation of the power circuit of the converter, (that is with the inductor L always crossed by a current) are indicated with a continuous line, while the wave form of the currents in a phase of operation during which the converter functions in a discontinuous mode, that is when the current through the inductor L becomes null for a certain interval of the period of the timing signal that establishes the switching frequency of the converter, which is normally fixed by a local oscillator or derived from a system's clock, are indicated with point-dash lines.

Of course, the output voltage Vo must be suitably stabilized. This requirement is commonly satisfied by a PWM circuit or control network suitable to vary the duty-cycle of a driving signal of the transistor M. Naturally, dimensioning of the power components of the converter, switching frequency and duty-cycle, are normally designed for a certain contemplated steady state load level. Therefore the PWM control circuit provides to reduce or increase the duty-cycle in function of the variations of the load or of the (unstabilized) supply voltage.

As already mentioned above, an attendant requirement of this as of other types of static converters is represented by the limitation (minimization) of the energy losses in order to maintain the conversion efficiency as high as possible. In this context, the diagram of Fig. 3 schematically shows an operation mode normally referred to as "burst mode", which is implemented according to a known technique for reducing the power consumption during periods of operation in a discontinuous mode of the converter (that is under conditions of relatively low load level). As may be observed, the switch M is enabled to switch at the switching frequency fixed by the timing signal and according to a duty-cycle controlled by the PWM network, only for brief intervals of time (bursts) that are defined by the rising of the output voltage of the error amplifier, that is for the whole period of time necessary for the output voltage to reach and rise above a maximum threshold. Therefore, during switching bursts there are switching losses.

According to the present invention, also these energy losses that can be imputed to the switching bursts during periods of operation at relatively low load of the converter may be advantageously eliminated by subtracting, during this period of operation, the control of the power switch M to the PWM network and by implementing a direct turn-on and -off control of the power switch in a hysteretic mode. This is achieved by exploiting the signal produced by a common hysteresis comparator.

The result is to implement a mode of operation that is depicted in the diagram of Fig. 4, which may be readily compared with the diagram of Fig. 3 of the known system.

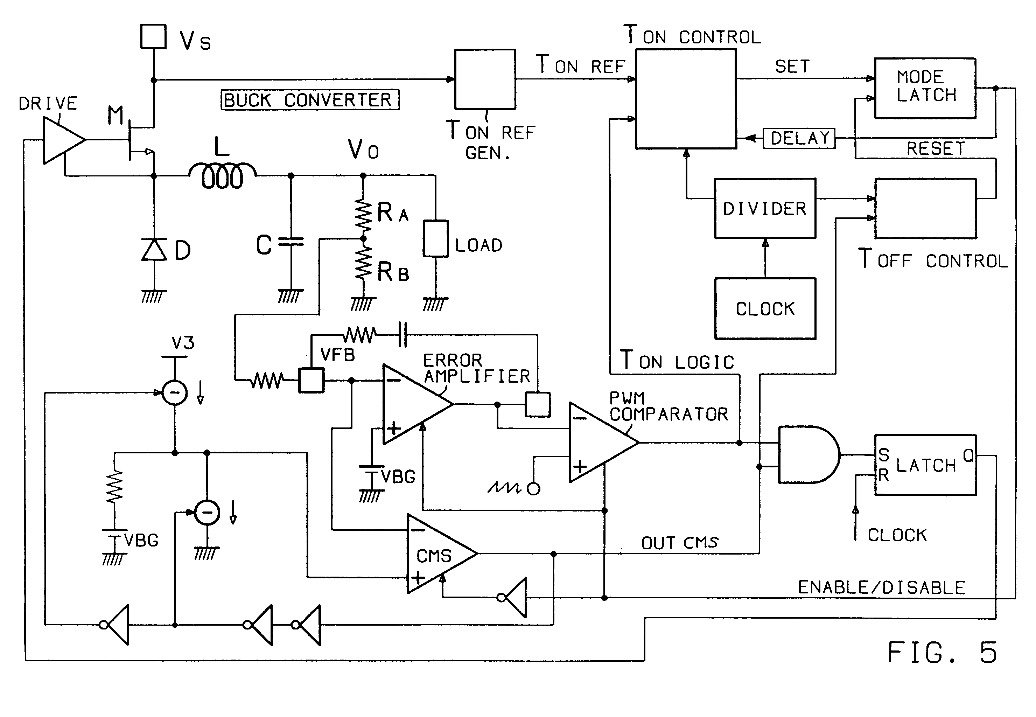

Of course, the control circuit must be capable of selecting automatically one or the other mode of control, in function of the level of the load of the converter. This is implemented by the circuit of the invention depicted in Fig. 5.

With reference to Fig. 5, a first PWM control network is composed of an ERROR AMPLIFIER capable of amplifying the difference between a VFB voltage, that replicates the output voltage Vo, taken from an intermediate node of a voltage divider RA-RB with a reference voltage VBG, to generate an amplified error signal, which is fed to the inverting input of a PWM comparator. To the non-inverting input of the PWM comparator a suitable saw-tooth signal of a frequency that can be established by a local oscillator or derived by division from a general clock's frequency, is applied.

The PWM comparator outputs a logic signal which, through a latch circuit, determines the turning-off of the power switch M at a certain instant of the switching period, which is established by the timing signal of the converter fed to another input (reset) of the latch circuit.

A second, voltage threshold, hysteretic control network is composed of a comparator CMS, to an inverting input of which the voltage VFB, replica of the output voltage Vo is applied. To a non-inverting input of the comparator is applied a reference voltage which can be switched from a negative shift limit value to a positive shift limit value, and viceversa, as referred to a constant reference voltage DBG. The lower and upper reference limits are selected by the output state of the CMF comparator, through a control line of a pair of current generators. This implements an hysteretic control within a band of variation of the output voltage Vo defined by the minimum and maximum thresholds, coherently set at the non-inverting input of the comparator.

The signal produced by the PWM control network and the signal produced by the hysteretic control network are fed to respective inputs of an AND gate, the output of which is connected to the "set" input of the driving latch of the power switch M of the power section of the converter.

An ENABLE/DISABLE logic signal activates/disactivates the PWM control network and the hysteretic control network in a mutually exclusive manner, as depicted in Fig. 5.

Selection of one or other control mode, in function of the load level of the converter, is implemented without employing dissipative sensing devices, as for example a sensing resistance connected in the power circuit of the converter. Basically, the selection occurs by monitoring the duty-cycle of the turn-off signal of the power switch M produced by the PWM control circuit, during a phase of operation when the latter is active, and the duty-cycle of the switching signal produced by the hysteretic control network (that is the output signal of the comparator CMS), during a phase of operation when the hysteretic control network is active.

In the first case, that is during a phase of operation with a relatively high load of the converter, the switching duty-cycle, represented by the TONLOGIC signal present at the output of the PWM comparator, is compared with a signal representative of a threshold duty-cycle TONREF which is purposedly generated by a dedicated TONREFGEN generating circuit.

This representative signal of a preset threshold duty-cycle may be designed so a to correspond to a predetermined percentage of a nominal design duty-cycle of the converter, for example to a percentage comprised between 30% and 80% of the design duty-cycle. The TONREFGEN generating circuit may be provided with circuit devices capable of keeping constant the fractionary duty-cycle signal produced, independently of eventual variations of the (unstabilized) supply voltage Vs. In other words, the signal produced may vary with the supply voltage in order to keep constant the preset ratio with the design duty-cycle.

A logic circuit TONCONTROL operates a comparison between the current duty-cycle, represented by the TONLOGIC signal, with the signal representative of said threshold reference duty-cycle TONREF and, when the current duty-cycle drops below the reference duty-cycle, the circuit block TONCONTROL generates a said logic signal for a MODE LATCH, the output signal of which coherently disables the error amplifier and the PWM comparator and enables the hysteresis comparator CMS which therefore assumes a direct control of the turn-on and of the turn-off of the power switch M, through the signal OUTCMS, which is fed through the AND gate to the "set" terminal of the driving latch.

The period of time during which the OUTCMS signal maintains the power switch M in an OFF condition (TOFF semi-period of the diagram of Fig. 4), during which a discharge of the output voltage Vo toward the lower threshold of the comparator CMS occurs, is monitored by the TOFFCONTROL block.

According to an embodiment, the signal OUTCMS is compared by the TOFFCONTROL block with a certain internal reference period of time, which may be provided by a divider of a system's clock or local oscillator frequency, capable of generating a RIFPER signal, which may be used by the TOFFCONTROL block as well as by the TONCONTROL block, as a unit of measurement of time intervals (that is as a sampling signal).

When the load conditions increase and the time interval T_{OFF} drops below a certain preset limit, the T_{OFF} block generates a reset signal for the MODE LATCH, whose output signal changes state, thus enabling again the PWM control network and disabling the hysteretic control network.

At this point the system returns to a normal PWM control condition and the TONCONTROL block is again ready to detect future reductions of the load below a preset level which will cause a return of the system to a hysteretic control mode, implemented by the control network functionally constituted by the hysteresis comparator CMS.

According to a preferred embodiment, a certain hysteresis is introduced in controlling the MODE LATCH by the TONCONTROL circuit, in order to prevent that the system passes from a PWM control mode to an hysteretic control mode because of spurious impulses due to momentary load variations.

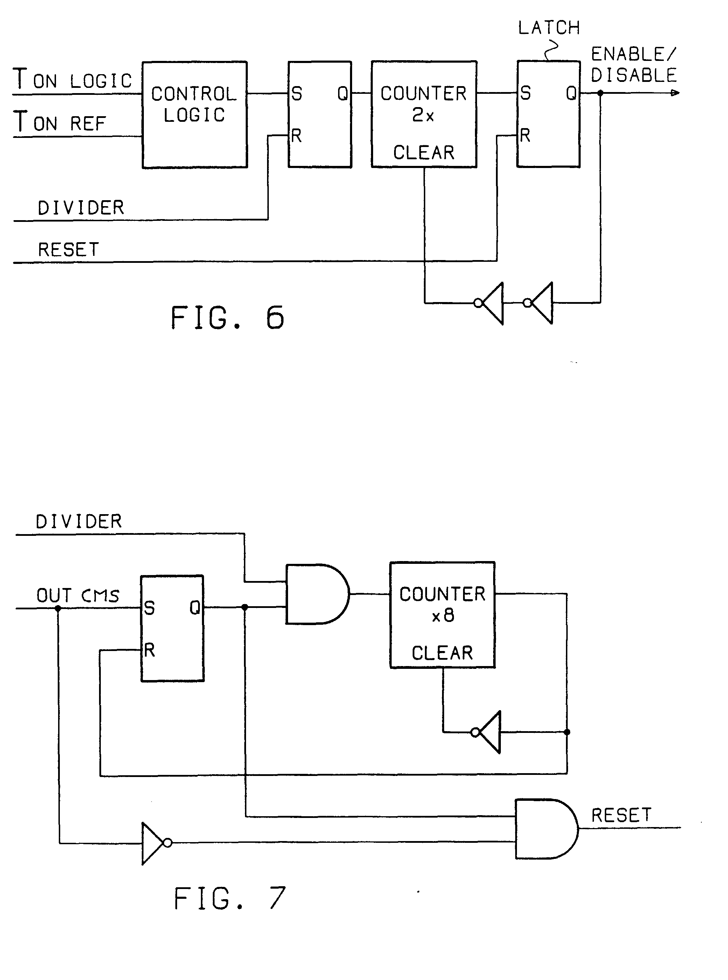

According to an embodiment, the TONCONTROL circuit which controls the MODE LATCH may be implemented as shown in the partial diagram of Fig. 6. A first logic circuit compares the TONLOGIC and TONREF signals and the resulting signal is fed to a "set" input of a latch, which is sampled at a frequency determined by the DIVIDER block, whose output signal is applied to the "reset" terminal of the latch. The output signal is also fed to a COUNTER_x2, whose output state represents the "set" signal of the MODE LATCH.

A refresh function is implemented by the delay network, composed by the pair of inverters, through which the COUNTER_x2 is reset after a certain period of time, for example every 20-40 milliseconds, in order to prevent the passage from a PWM control mode to a hysteretic control mode because of spurious impulses at the level of load current absorption.

As already described above, the output of the MODE LATCH is reset by the signal produced by the TOFFCONTROL block, an embodiment of which is depicted in Fig. 7. The OUTCMS signal is fed to a "set" input of a latch and in an inverted form to an input of an AND output gate of the block. The (Q) output of the latch is connected to a second input of the output AND gate of the block and to an input of a second AND gate, to the other input of which is applied the sampling signal provided by the DIVIDER block. The output of the second AND gate is fed to a COUNTER_x8, whose output signal is applied to a "reset" input of the latch and, in inverted form, to the "reset" terminal of the same COUNTER_x8.

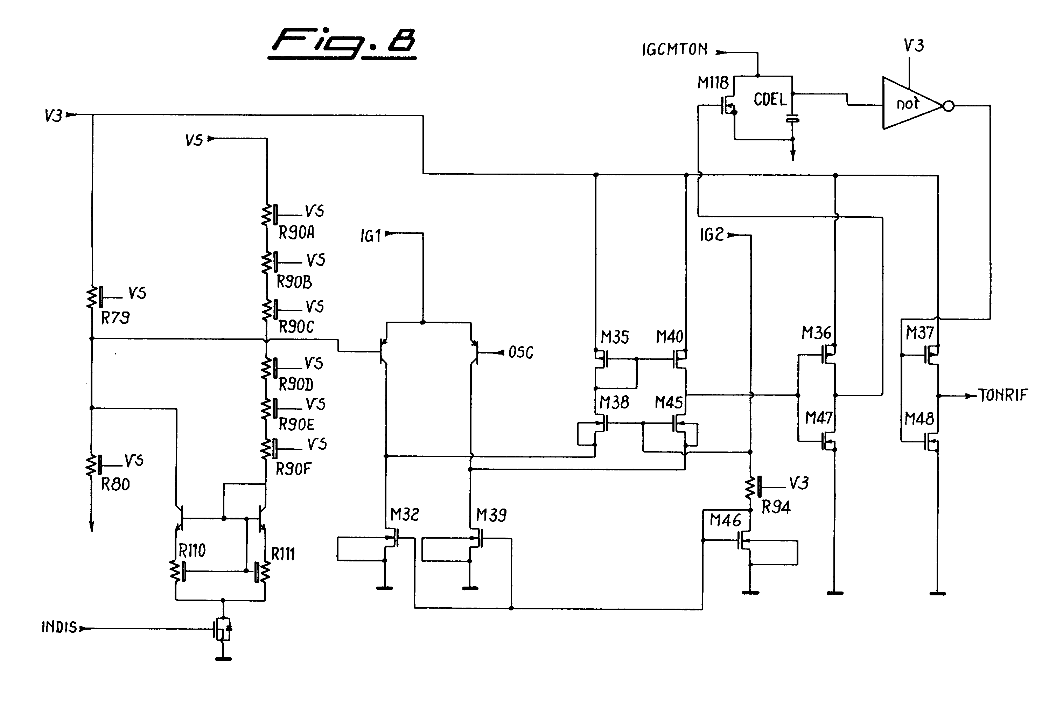

A circuit diagram for realizing a generator of a signal TONRIF representative of a reference duty-cycle is shown in Fig. 8. For desirably ensuring that the reference duty-cycle always corresponds to a certain percentage of a given design duty-cycle, for example to 0.4 of the reference duty-cycle (TON), the circuit that generates the signal TONRIF may be provided with a compensation network as shown in the example, capable of maintaining the TONRIF signal equivalent to 0.4 TON, independently of eventual variations of the (unstabilized) supply voltage Vs.

Purely with the intent of illustrating a sample realization, Fig. 8 shows the circuit diagram of the partial circuit of Fig. 6, that is of the circuit block for detecting a condition of light load and for transferring the control of the converter to the hysteretic control network, by the ENABLE signal.

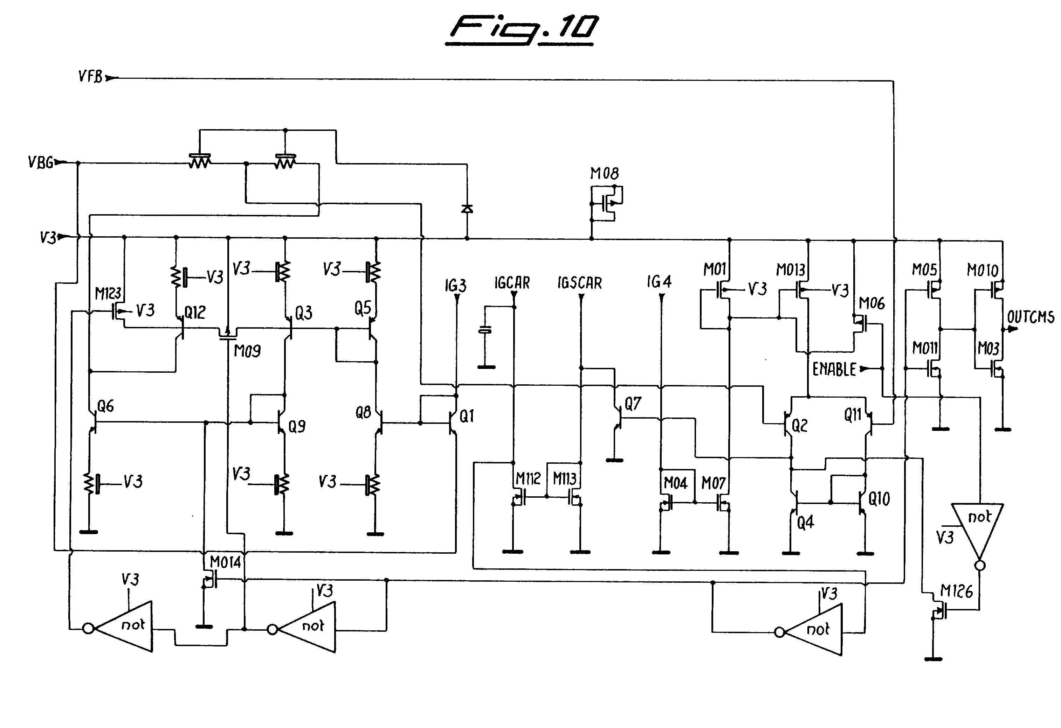

A complete circuit diagram of an embodiment of a CMS hysteresis comparator, usable in the circuit of the invention of Fig. 5 is shown in Fig. 10.

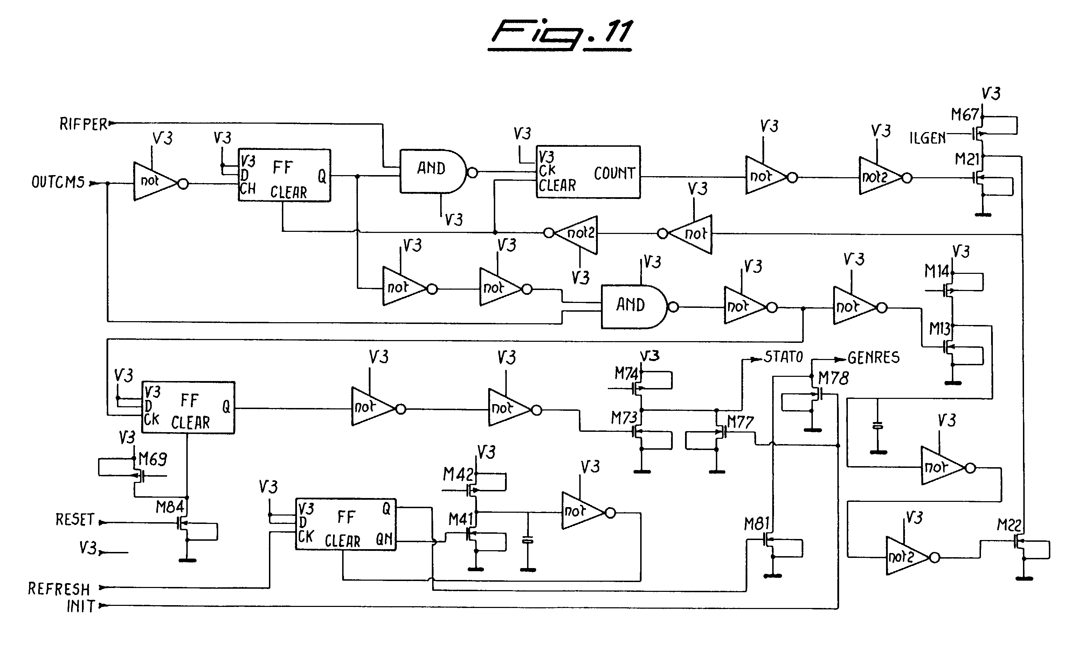

Finally, a complete circuit diagram relative to an embodiment of the TOFFCONTROL block of the circuit of the invention of Fig. 5 is shown in Fig. 11.

Figures from 8 to 11 show practical circuit diagrams produced by CAD simulation. A detailed description of these sample circuits of one of various possible forms of realization of the circuit of the invention is deemed superfluous in the present context, in view of the fact that a skilled technician will be perfectly able to read these circuit diagrams and to reduce them to practice without any difficulty. The inclusion of these detailed information of a practical example of realization of the circuit of the invention must be intended purely for illustrative purposes and not as a limitation of the invention which may be implemented also in other innumerable different circuit forms and which is intended to be defined by the following claims.

## Claims

1. DC-to-DC converter having a power section comprising at least a switch (M) capable of switching at a frequency established by a timing signal (Clock), an output buffer capacitor (C), a recirculation diode (D) and a control and stabilization section of the output voltage comprising a first control loop which comprises an error amplifier (ERROR AMPLIFIER) and a PWM control comparator (PWM COMPARATOR) for controlling the duty-cycle of said switch in function of the output voltage (Vo), a second control loop which comprises a threshold comparator (CMS) for controlling the turning-on and turning-off of said switch (M) in function of the output voltage (Vo), and means monitoring the load level of the converter for disabling said first control loop and enabling said second control loop when the load level of the converter drops below a preset threshold and of enabling said first control loop and disabling said second control loop when the load level rises above a preset threshold, and wherein said thresholds of the level of load are implemented without using sensing resistances of the output current by establishing a reference duty-cycle that is comparable with the current duty-cycle.

2. A converter as defined in claim 1, wherein said reference duty-cycle has a value comprised between 30% and 80% of a steady state duty-cycle of the converter in a continuous mode of operation under control of said first control loop.

3. A converter as defined in claim 1, and comprising a driving circuit (DRIVE) of said (M) switch comprising a logic AND gate, receiving through a first input a first logic signal (T_{ON} LOGIC) output by said PWM control comparator (PWM COMPARATOR) and having an output connected to a set input (S) of a first latch circuit (LATCH) having a reset terminal (R) to which said timing signal (Clock) is applied, the output signal of the latch circuit controlling the state of said switch (M);
a first logic circuit (T_{ON} REF GEN) generating a second logic signal (T_{ON} REF) representative of a reference duty-cycle;
a second logic circuit (T_{ON} CONTROL) comparing said second logic signal (T_{ON} REF) and a first logic signal (T_{ON} LOGIC) representative of the current duty-cycle of the converter and generating a third, logic set signal (SET) for a second latch (MODE LATCH), the output signal of which (ENABLE DISABLE) enables or disables said error amplifier (ERROR AMPLIFIER) and said PWM comparator (PWM COMPARATOR) when the current duty-cycle (T_{ON} LOGIC) drops below said reference duty-cycle (T_{ON} REF);
a hysteresis comparator (CMS), enabled by said error amplifier and PWM comparator disabling signal (DISABLE), generating a fourth logic signal (OUT CMS) which is applied to a second input of said AND gate for turning on and turning off said switch (M) in function of the dropping of the output voltage (Vo) of the converter below a first preset minimum reference threshold or of the rising of the output voltage (Vo) of the converter above a second preset maximum reference threshold;
a third logic circuit (T_{OFF} CONTROL) determining the duty-cycle of said fourth signal (OUT CMS) produced by said threshold comparator (CMS) and generating a fifth logic signal (RESET) for resetting said second latch (MODE LATCH) when the duty-cycle of said fourth logic signal (OUT CMS) is above a preset threshold, thus enabling said error amplifier (ERROR AMPLIFIER) and said PWM comparator (PWM COMPARATOR) and disabling said comparator (CMS).

4. A converter as defined in claim 3, wherein said first logic circuit (T_{ON} REF GEN) generates a signal (T_{ON} REF) representative of a reference constant duty-cycle that varies with the varying of the supply voltage.

5. A converter as defined in claim 3, wherein said second logic circuit has means (DELAY) for producing a certain hysteresis in the change of state of said third logic signal (SET) that sets said second latch (MODE LATCH).

## Patentansprüche

1. Gleichstrom/Gleichstrom-Umsetzer mit einem Leistungsabschnitt, der wenigstens einen Schalter (M), der mit einer durch ein Taktgebersignal (Clock) bestimmten Frequenz schalten kann, einen Ausgangspufferkondensator (C), eine Rückleitungsdiode (D) und einen Steuer- und Stabilisierungsabschnitt für die Ausgangsspannung enthält, wobei der Steuer- und Stabilisierungsabschnitt versehen ist mit einer ersten Steuerschleife, die einen Fehlerverstärker (ERROR AMPLIFIER) und einen PWM-Steuerkomparator (PWM COMPARATOR) zum Steuern des Einschaltzyklus des Schalters in Abhängigkeit von der Ausgangsspannung (Vo) enthält, einer zweiten Steuerschleife, die einen Schwellenkomparator (CMS) zum Steuern des Schließens und Öffnens des Schalters (M) in Abhängigkeit von der Ausgangsspannung (Vo) enthält, und einer Einrichtung zum Überwachen des Lastpegels des Umsetzers, um die erste Steuerschleife zu sperren und die zweite Steuerschleife freizugeben, wenn der Lastpegel des Umsetzers unter einen im voraus gesetzten Schwellenwert fällt, und zum Freigeben der ersten Steuerschleife und zum Sperren der zweiten Steuerschleife, wenn der Lastpegel über einen im voraus gesetzten Schwellenwert ansteigt, wobei die Schwellenwerte des Lastpegels ohne Verwendung von Erfassungswiderständen für den Ausgangsstrom durch die Schaffung eines Referenzeinschaltzyklus, der mit dem momentanen Einschaltzyklus vergleichbar ist, implementiert werden.

2. Umsetzer nach Anspruch 1, wobei der Referenzeinschaltzyklus einen Wert besitzt, der im Bereich von 30 % bis 80 % eines Einschaltzyklus im stationären Zustand des Umsetzers bei einer durch die erste Steuerschleife gesteuerten kontinuierlichen Operation liegt.

3. Umsetzer nach Anspruch 1, mit einer Treiberschaltung (DRIVE) des Schalters (M), die ein logisches UND-Gatter enthält, das an einem ersten Eingang ein erstes logisches Signal (T_{ON} LOGIC), das vom PWM-Steuerkomparator (PVM COMPARATOR) ausgegeben wird, empfängt und an einem Ausgang mit einem Setzeingang (S) einer ersten Zwischenspeicherschaltung (LATCH) verbunden ist, die einen Rücksetzanschluß (R) besitzt, in den das Taktsignal (Clock) eingegeben wird, wobei das Ausgangssignal der Zwischenspeicherschaltung den Zustand des Schalters steuert;
einer ersten Logikschaltung (T_{ON} REF GEN), die ein zweites logisches Signal (T_{ON} REF) erzeugt, das einen Referenzeinschaltzyklus erzeugt;
einer zweiten Logikschaltung (T_{ON} CONTROL), die das zweite Logiksignal (T_{ON} REF) und ein erstes Logiksignal (T_{ON} LOGIC), das den momentanen Einschaltzyklus des Umsetzers darstellt, vergleicht und ein drittes logisches Setzsignal (SET) für einen zweiten Zwischenspeicher (MODE LATCH) erzeugt, dessen Ausgangssignal (ENABLE DISABLE) den Fehlerverstärker (ERROR AMPLIFIER) und den PWM-Komparator (PWM COMPARATOR) freigibt oder sperrt, wenn der momentane Einschaltzyklus (T_{ON} LOGIC) unter den Referenzeinschaltzyklus (T_{ON} REF) fällt;
einem Hysteresekomparator (CMS), der durch das Fehlerverstärkerund PWM-Komparator-Sperrsignal (DISABLE) freigegeben wird und ein viertes logisches Signal (OUT CMS) erzeugt, das in einen zweiten Eingang des UND-Gatters eingegeben wird, um den Schalter (M) in Abhängigkeit entweder vom Abfall der Ausgangsspannung (Vo) des Umsetzers unter einen ersten im voraus gesetzten minimalen Referenzschwellenwert oder vom Anstieg der Ausgangsspannung (Vo) des Umsetzers über einen zweiten im voraus gesetzten maximalen Referenzschwellenwert zu schließen oder zu öffnen;
einer dritten Logikschaltung (T_{OFF} CONTROL), die den Einschaltzyklus des vierten Signals (OUT CMS), das vom Schwellenkomparator (CMS) erzeugt wird, bestimmt und ein fünftes logisches Signal (RESET) erzeugt, um den zweiten Zwischenspeicher (MODE LATCH) zurückzusetzen, wenn der Einschaltzyklus des vierten logischen Signals (OUT CMS) über einem im voraus gesetzten Schwellenwert liegt, wodurch der Fehlerverstärker (ERROR AMPLIFIER) und der PWM-Komparator (PWM COMPARATOR) freigegeben werden und der Komparator (CMS) gesperrt wird.

4. Umsetzer nach Anspruch 3, wobei die erste Logikschaltung (T_{ON} REF GEN) ein Signal (T_{ON} REF) erzeugt, das einen konstanten Referenz-Einschaltzyklus darstellt, der sich mit der Änderung der Versorgungsspannung ändert.

5. Umsetzer nach Anspruch 3, wobei die zweite Logikschaltung eine Einrichtung (DELAY) zum Erzeugen einer bestimmten Hysterese bei einer Zustandsänderung des dritten logischen Signals (SET), das den zweiten Zwischenspeicher (MODE LATCH) setzt, erzeugt.

## Revendications

1. Convertisseur continu-continu comportant une partie de puissance comprenant au moins un commutateur (M) propre à commuter à une fréquence établie par un signal de synchronisation (Clock), un condensateur tampon de sortie (C), une diode de recirculation (D) et une partie de commande et de stabilisation de la tension de sortie comprenant une première boucle de commande qui comprend un amplificateur d'erreur et un comparateur de commande PWM pour contrôler le rapport cyclique du commutateur en fonction de la tension de sortie (Vo), une seconde boucle de commande qui comprend un comparateur de seuil (CMS) pour commander la fermeture et l'ouverture du commutateur (M) en fonction de la tension de sortie (Vo), et un moyen pour mesurer le niveau de charge du convertisseur pour invalider la première boucle de commande et valider la deuxième boucle de commande quand le niveau de charge du convertisseur chute en dessous d'un seuil prédéterminé et pour valider la première boucle de commande et invalider la deuxième boucle de commande quand le niveau de charge monte au-dessus d'un seuil prédéterminé, et dans lequel les seuils de niveau de charge sont mis en oeuvre sans utiliser de résistances de détection du courant de sortie en établissant un rapport cyclique de référence qui est comparable au rapport cyclique en cours.

2. Convertisseur selon la revendication 1, dans lequel le rapport cyclique de référence a une valeur comprise entre 30 et 80 % d'un rapport cyclique à l'état stable du convertisseur dans un mode de fonctionnement continu sous la commande de la première boucle de commande.

3. Convertisseur selon la revendication 1, comprenant un circuit de commande du commutateur (M) comprenant une porte logique ET, recevant par une première entrée un premier signal logique (T_{ON} LOGIC) de sortie du comparateur de commande PWM et ayant une sortie connectée à une entrée de mise à un (S) d'un premier circuit de bascule (LATCH) ayant une borne de remise à zéro (R) à laquelle est appliquée le signal de synchronisation (Clock), le signal de sortie du circuit de bascule commandant l'état dudit commutateur (M) ;
un premier circuit logique produisant un deuxième signal logique (T_{ON} REF) représentatif d'un rapport cyclique de référence ;
un deuxième circuit logique comparant le deuxième signal logique (T_{ON} REF) et un premier signal logique représentatif du rapport cyclique en cours du convertisseur (T_{ON} LOGIC) et produisant un troisième signal logique de mis à un (SET) pour une deuxième bascule (MODE LATCH), dont le signal de sortie valide ou invalide l'amplificateur d'erreur et le comparateur PWM quand le rapport cyclique en cours (T_{ON} LOGIC) chute en dessous du rapport cyclique de référence (T_{ON} REF) ;
un comparateur à hystérésis (CMS) validé par l'amplificateur d'erreur et le signal d'invalidation du comparateur PWM, produisant un quatrième signal logique (OUT CMS) qui est appliqué à une deuxième entrée de la porte ET pour fermer et ouvrir le commutateur (M) en fonction de la chute de la tension de sortie (Vo) du convertisseur en dessous d'un premier seuil de référence minimum prédéterminé ou de la montée de la tension de sortie (Vo) du convertisseur au-dessus d'un second seuil de référence maximum prédéterminé ;
un troisième circuit logique déterminant le rapport cyclique du quatrième signal (OUT CMS) produit par le comparateur de seuil (CMS) et produisant un cinquième signal logique (RESET) pour remettre à zéro la seconde bascule (MODE LATCH) quand le rapport cyclique du quatrième signal logique (OUT CMS) est au-dessus d'un seuil prédéterminé, validant ainsi l'amplificateur d'erreur et le comparateur PWM, et invalidant le comparateur (CMS).

4. Convertisseur selon la revendication 3, dans lequel le premier circuit logique produit un signal (T_{ON} REF) représentatif d'un rapport cyclique de référence constant qui varie avec la variation de tension d'alimentation.

5. Convertisseur selon la revendication 3, dans lequel le deuxième circuit logique comprend un moyen (DELAY) pour produire une certaine hystérésis dans le changement d'état du troisième signal logique (SET) qui met à un la seconde bascule (MODE LATCH).
